# EUROPÄISCHE PATENTSCHRIFT

(11) **EP 0 846 915 B1**
(45) Veröffentlichungstag und Bekanntmachung des Hinweises auf die Patenterteilung: **27.08.2003**
(21) Anmeldenummer: 97104417.7
(22) Anmeldetag: 14.03.1997
(51) Int. Cl.: F21V 8/00, F21S 6/00, F21S 8/00, F21V 7/00

(54) **Innenraumleuchte**
Inner room light
Lumière pour espace intérieur

(30) Priorität: 04.12.1996 DE 19650295
(43) Veröffentlichungstag der Anmeldung: 10.06.1998
(60) Teilanmeldung: 03013545.3
(73) Patentinhaber: Siteco Beleuchtungstechnik GmbH, 83301 Traunreut (DE)
(72) Erfinder: Ferdows, Sonja, 83278 Traunstein (DE); Leibig, Joachim, 83374 Oderberg (DE); Susemihl, Ingo, 83308 Trostberg (DE)
(74) Vertreter: Goddar, Heinz J., Dr.

(56) Entgegenhaltungen:
- EP-A- 0 442 529
- EP-A- 0 479 042
- EP-A- 0 560 605
- EP-A- 0 573 268
- WO-A-89/02606
- WO-A-94/09311
- US-A- 5 396 350
- US-A- 5 555 109

## Beschreibung

Die Erfindung bezieht sich auf eine Innenraumleuchte gemäß dem Oberbegriff des Patentanspruches 1.

Ein wesentliches Problem der Innenraumbeleuchtung, insbesondere bei der Bürobeleuchtung besteht darin, einerseits auf einer zu beleuchtenden Fläche des Innenraumes eine vorzugsweise gleichmäßige, jedenfalls aber ausreichende Beleuchtungsstärke zu erzielen, gleichzeitig aber - und das gilt insbesondere für Arbeitsplätze, vor allem auch für Bildschirmarbeitsplätze - eine unerwünschte Blendung durch die gewählte Beleuchtung auszuschließen. Besonders kritisch ist dabei die Reflexblendung, hervorgerufen durch Lichtreflexionen auf Arbeitsflächen oder Arbeitsmitteln, wie z. B. einem Monitor.

Da diese Problemstellung bekannt ist, wurde dazu auch bereits eine Vielzahl von Lösungsvorschlägen gemacht. Gemeinsam ist diesen bekannten Lösungen, eine entsprechende Innenraumleuchte so auszugestalten, daß einerseits ihre Leuchtdichte trotz hoher Lichtstärke einen vorgegebenen Wert nicht übersteigt und ferner die Lichtstärkeverteilung der Leuchte durch gezielte Lichtlenkung so ausgebildet ist, daß dabei ein vorgegebener Abblendwinkel γ, gemessen gegen die Vertikale, eingehalten wird. Ein typisches Beispiel für einen Leuchtentyp, mit dem diese Bedingungen für eine Querentblendung,mit gewissen Einschränkungen auch eine Längsentblendung zu erfüllen sind, ist die Spiegelrasterleuchte. Deren lichttechnisches Prinzip besteht - bezogen auf den hier vorliegenden Fall betrachtet - darin, eine möglichst große Lichtmenge durch eine relativ kleine Lichtaustrittsöffnung so gelenkt abzustrahlen, daß die genannten Bedingungen noch eingehalten sind. Wesentlichen Anteil an der Lichtlenkung hat dabei das aufwendige und in seiner Herstellung teure Spiegelraster.

Wenn man von den sogenannten Indirektleuchten absieht, die das Licht vor allem gegen die Raumdecke und gegebenenfalls auch oberhalb des normalen Sichtbereiches liegende Wandteile abstrahlen, besteht eine weitere Möglichkeit, den genannten Abstrahlungsbedingungen zu genügen, darin, die der zu beleuchtenden Fläche zugekehrte Lichtaustrittsöffnung der Inneraumleuchce zu vergrößern.

Aus EP-B1-0 665 936 ist ein Beispiel für einen derartigen Lösungsansatz bekannt, in der eine Leuchte mit langgestrecktem Leuchtmittel und Reflektoren beschrieben ist, die sich "vogelschwingenartig" bis in die Nähe von Deckenelementen erstrecken, an denen die Leuchte befestigt ist. Die Ausgestaltung der Reflektorflächen als solche bedeutet bei dieser Leuchte eine gegenüber einer Spiegelrasterleuchte relativ große Lichtaustrittsfläche. Daneben wird als weiterer Vorteil angesehen, daß aufgrund der Reflektorkontur auch ein Teil des Lichtes an die die Leuchte umgebende Deckenfläche abgestrahlt wird und sich bei hohem Leuchtenwirkungsgrad eine angenehme, ruhige und tageslichtähnliche Lichtwirkung einer Leuchte ergibt, die auch in Räumen mit Bildschirmarbeitsplätzen eingesetzt werden kann.

Aus EP-B1-0 371 073 ist ferner eine Vorrichtung mit einer Lichtleiterplatte bekannt, in der Licht - ausgehend von einer Lichtquelle - mit Komponenten parallel zu den großen Plattenflächen geführt wird und aus Erhebungen austritt, die auf der Oberfläche einer dieser Plattenflächen mit einer dazwischen aufgebrachten Haftschicht dicht an dicht angeordnet sind sowie nach Höhe und Breite in der Größenordnung zwischen 0,5 und 0,001 mm liegen. Dabei wird davon ausgegangen, daß bei Erhebungen dieser Größenordnung deren abstrahlende Fläche in der Projektion auf einen Betrachter etwa mit der Untergrenze des Auflösungsvermögens des menschlichen Auges zusammenfällt. Aus dieser optischen Überlegung wird abgeleitet, daß die gesamte abstrahlende Fläche gleichmäßig hell erscheint.

Es mag zwar zutreffen, daß eine Vielzahl kleiner, geometrisch etwa im Auflösungsbereich des menschlichen Auges nahe beieinander liegender Lichtpunkte dann dem Betrachter als eine geschlossene Fläche erscheint, wenn er die Einzelpunkte nicht mehr voneinander unterscheiden kann. Dies ist aber noch nicht gleichbedeutend mit einer gleichmäßigen Leuchtdichteverteilung über die gesamte abstrahlende Fläche, die gerade bei der Lichtauskopplung aus Lichtwellenleitern problematisch ist. Ebensowenig ist damit auch bereits eine Lösung für das Blendungsproblem gegeben.

In diesem Zusammenhang wird zur Erläuterung z. B. auf EP-B1-0 479 042 verwiesen. Dort wird - vereinfacht - die Erkenntnis dargelegt, daß eine mit ihrer Projektion etwa im Auflösungsbereich des menschlichen Auges liegende, somit nahezu punktförmige Fläche unabhängig von dem absoluten Wert ihrer Leuchtdichte nur dann keine Reflexblendung hervorruft, wenn außerdem ihr Abstand zu gleichartigen Nachbarflächen aureichend groß ist. Erklärt wird dieser Effekt damit, daß Reflexblendung darauf beruhen soll, daß gleichzeitig mehrere benachbarte Sehnerven des Auges durch zu hohe Lichtreize erregt werden. Da nach der Lehre der oben zitierten bekannten Vorrichtung Mikroerhebungen dicht an dicht zu packen sind, müßte demnach die Leuchtdichte der lichtabstrahlenden Fläche entsprechend niedrig gewählt werden, um Blendung zu vermeiden.

Abgesehen davon wird der Leuchtenwirkungsgrad einer solchen Innenraumleuchte nicht nur von der Art der Auskopplung des in der Lichtleiterplatte transportierten Lichtes sondern auch von der Einkopplung dieses Lichtes in die Lichtleiterplatte wesentlich beeeinflußt. Dazu werden zwei Lösungsmöglichkeiten angegeben. Im einen Fall wird als Einkoppelelement eine Mehrschichtplatte vorgeschlagen, deren Schichten zur gezielten Lichtlenkung in Strahlrichtung des von der Lichtquelle eingestrahlten Lichtes optisch immer dichter werden. Das bedeutet, abgesehen von dem auch technologischen Aufwand, zwangsläufig Mehrfachreflexionen des Lichtes bereits beim Einkoppeln mit entsprechenden Lichtverlusten. Als weitere Möglichkeit wird ein dachförmig über der Lichtquelle angeordneter planer Reflektor vorgeschlagen. Dieser Vorschlag ist zwar einfacher zu realisieren, führt aber, wie sich erwiesen hat, nicht zu befriedigenden Ergebnissen. Mit der in EP-B1-0 371 073 angegebenen Lehre ist somit zwar eine Richtung angegeben, daß unter Verwendung von Lichtwellenleitern eine Innenraumleuchte rasterlos gestaltet werden könnte, es wird damit aber noch nicht eine lichttechnisch befriedigende, den üblichen Anforderungen hinsichtlich Leuchtenwirkungsgrad und auch Blendfreiheit genügende Lösung vermittelt.

Ferner sind aus US-A-5 396 350 sowie US-A-5 555 109 Beleuchtungsanordnungen bekannt, die bei geringem Querschnitt insbesondere im Hinblick auf die Anwendung zur Hintergrundbeleuchtung von elektronischen Sichtgeräten optimiert sind. Dabei wird das von einer Lichtquelle diffus abgestrahlte Licht seitlich in eine Lichtleiterplatte eingekoppelt und in dieser mittels Totalreflexion transportiert. Auf eine der Oberflächen der Lichtleiterplatte ist unmittelbar ein Raster von Mikroprismen mit einer parallel zur Lichteintrittsfläche liegenden Lichtaustrittsoberfläche aufgebracht. Dabei besitzt jedes Mikroprisma mindestens eine Seitenwand, die in einem vorgegebenen Winkel vertikal zur Oberfläche der Lichtleiterplatte derart geneigt ist, daß von der Lichtleiterplatte in das Mikroprisma eintretendes Licht an dieser geneigten Seitenwand reflektiert wird und im wesentlichen senkrecht zu der Lichtaustrittsfläche der Mikroprismen austritt. Zusätzlich kann auf der Lichtaustrittsfläche der Mikroprismen ein Raster von Mikrolinsen vorgesehen sein, um das von den Mikroprismen abgestrahlte Licht weiter zu bündeln. Mit der bekannten Beleuchtungsanordnung sollen insbesondere die bekannten Nachteile von Flüssigkristallanzeigeeinheiten behoben werden, bei denen der Kontrast bei hohen Betrachtungswinkeln (große Winkel bezogen auf die Normale zur Oberfläche der Anzeigeeinheit) zu wünschen übrig läßt sowie darüberhinaus die visuelle Farbart von diesem Betrachtungswinkel abhängig ist.

EP 0 573 268 A2 offenbart eine Flüssigkristallanzeige mit einer Licht konvergierenden Einheit, bei der Licht von einer Lampe, die von einem Einkoppelreflektor umgeben ist, seitlich in einen Lichtleiter eingestrahlt wird. Zur Auskoppelung von Licht aus dem Lichtleiter sind Prismen vorgesehen, welche eine Lichtstärkeverteilung erzeugen, die nicht blendungsbegrenzt ist.

Der vorliegenden Erfindung liegt die Aufgabe zugrunde, eine Innenraumleuchte der eingangs genannten Art zu schaffen, die im Hinblick auf den Leuchtenwirkungsgrad und die Einhaltung von Entblendungsbedingungen mit konventionellen Leuchtentypen, wie z. B. Spiegelrasterleuchten, durchaus vergleichbar ist, dabei aber von dem Prinzip ausgeht, das von einer Lichtquelle abgestrahlte Licht, unter Verwendung eines Lichtwellenleiters auf eine im Vergleich zu konventionellen Innenraumleuchten relativ große lichtabstrahlende Fläche gleichmäßig und mit gutem Wirkungsgrad zu lenken und unter Einhaltung der bekannten Entblendungsbedingungen abzustrahlen.

Bei einer Innenraumleuchte der eingangs genannten Art wird diese Aufgabe mit den im Kennzeichen des Patentanspruches 1 beschriebenen Merkmalen gelöst.

Diese Lösung geht zunächst von der Erkenntnis aus, daß sich das aus US-A-5 555 109 und US-A- 5 396 350 bekannte Konzept für ein optisches Beleuchtungssystem, obwohl zunächst insbesondere zum Beleuchten unterschiedlicher Anzeigeeinheiten entwickelt, unter bestimmten Voraussetzungen auch bei einer Innenraumleuchte einsetzen ließe. Voraussetzung wäre allerdings, daß sich die daraus bekannte Lichtauskopplung auch bei für die Innenraumbeleuchtung erforderlichen großen Flächen einsetzen und sich bei einem für die Raumbeleuchtung ausreichenden Wirkungsgrad der Leuchte zugleich eine Lichtlenkung erreichen ließe, die der einer konventionellen, blendungsfreien Innenraumleuchte entspricht.

Im Gegensatz zu einer Anzeigeeinheit kommt es bei einer Innenraumleuchte darauf an, die das Licht abstrahlende Fläche, hier die Lichtaustrittsfläche der Leuchte, nicht nur mit gutem Wirkungsgrad möglichst gleichmäßig auszuleuchten, sondern darüberhinaus auch die Lichtabstrahlung so zu lenken, daß die für eine derartige Beleuchtung festgelegten Abblendbedingungen, hinsichtlich der Längs- und Querentblendung der Leuchte, vor allem aber auch im Hinblick auf eine mögliche Reflexblendung eingehalten werden.

Wie Untersuchungen gezeigt haben beziehungsweise die erfindungsgemäße Lösung lehrt, sind diese Anforderungen unter Anpassung der bekannten Lösung an die spezifischen Randbedingungen für eine Innenraumleuchte lichttechnisch unter bestimmten Voraussetzungen erfüllbar. Erzielt wird damit eine im Vergleich zu einleitend diskutierten, lichttechnisch vergleichbaren bekannten Lösungen extrem flache, dabei funktionale Leuchte, die insbesondere auch die geometrischen Abmessungen moderner Lampentypen vorteilhaft nutzt. Bei der erfindungsgemäßen Lösung wird der von der Lichtquelle erzeugte Lichtstrom mit hohem Wirkungsgrad in die Lichtleiterplatte(n) eingekoppelt und unter für die Innenraumbeleuchtung festgelegten Abstrahlungsbedingungen blendfrei wieder ausgekoppelt. Dabei kommt es weniger auf die absolute Dimension der einzelnen Elemente ("Erhebungen") der das Licht auskoppelnden Prismenstruktur an, als auf deren Gestaltung und Lage der Reflexionsflächen, um die gewünschte Lichtverteilung zu erzielen, Längs- und Querentblendung der Innenraumleuchte zu erreichen und darüberhinaus eine Reflexblendung, hervorgerufen durch Reflexionen an von der Innenraumleuchte beleuchteten Flächen, zu vermeiden.

Wie in Unteransprüchen beschriebene Weiterbildungen der Erfindung zeigen, ist eine Mehrzahl von Möglichkeiten denkbar, dieses Gestaltungsprinzip weiter zu entwickeln und an unterschiedliche Beleuchtungsaufgaben anzupassen.

Ausführungsbeispiele der Erfindung werden im folgenden anhand der Zeichnung näher beschrieben. Dabei zeigen:
Figur 1 in dreidimensionaler Darstellung ein Beispiel für eine erfindungsgemäß ausgebildete Innenraumleuchte mit einer langgestreckten Lichtquelle, einem diese umgebenden Hauptreflektor sowie seitlich und quer zur Lampenlängsachse an den Reflektor angesetzten Lichtleiterplatten mit einem Lichtaustritt auf der Unterseite,
Figur 2 einen Querschnitt zu der in Figur 1 dargestellten Innenraumleuchte mit die Lenkung des von der Lichtquelle abgestrahlten Lichtes schematisch andeutenden Teilstrahlen,
Figur 3 und 4 je ein Diagramm für eine Lichtverteilungskurve für das von der Lichtquelle sowie dem diese umgebenden Hauptreflektor abgegebene Licht bzw. Lichtverteilungskurven für das von der Innenraumleuchte insgesamt abgestrahlte Licht sowie in der C0-180°-Ebene als auch in der C90-270°-Ebene,
Figur 5 bis 11 schematisch je eine weitere Ausführungsform einer erfindungsgemäß ausgebildeten Innenraumleuchte mit langgestreckter Lichtquelle.

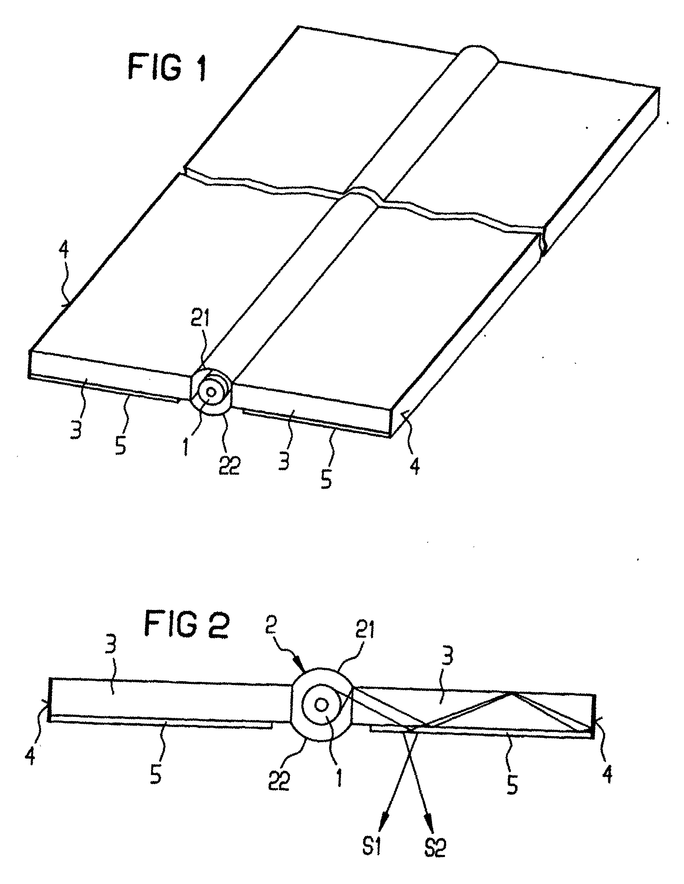

In Figur 1 und Figur 2 ist in einer schematischen Darstellung jeweils eine dreidimensionale Ansicht bzw. ein Querschnitt für eine Innenraumleuchte gezeigt, deren charakteristisches äußeres Merkmal in einer ausgeprägt flächenhaften Gestaltung liegt. Als Lichtquelle dieser Innenraumleuchte wird in diesem Beispiel eine mit ihrer Längsachse in der Mittelebene der Leuchte liegende langgestreckte Lampe 1 verwendet, der konzentrisch zu ihrer Achse ein sie umgebender Hauptreflektor 2 zugeordnet ist. Dieser Hauptreflektor 2 besteht aus zwei Halbschalen 21 und 22, die im Querschnitt kreisabschnittförmig ausgebildet und - bezogen auf die Leuchte - oberhalb bzw. unterhalb der Lampe 1 angeordnet sind. Die beiden Halbschalen 21, 22 des Hauptreflektors 2 sind auf ihrer der Lampe 1 zugekehrten Innenseite diffus reflektierend ausgebildet. An die auf Abstand zueinander stehenden Seitenränder der Halbschalen 21, 22 des Hauptreflektors 2 ist zu beiden Seiten der Lampe 1 senkrecht und quer jeweils mit einer Stirnseite eine Lichtleiterplatte 3 angesetzt. Die Lichtleiterplatten 3 weisen zueinander exakt parallele und plane Oberseiten bzw. Unterseiten auf, bestehen aus einem möglichst transparenten Material, beispielsweise Glas oder einem Kunststoff. Als Kunststoffmaterial bietet sich beispielsweise ungefärbtes Polymethylmethacrylat (PMMA) an, weil dieses in der Beleuchtungstechnik bereits vielfach verwendet wird. Selbstverständlich können aber auch andere Materialien eingesetzt werden, sofern sie die geforderten Lichtleiteigenschaften besitzen.

Die von der Lampe 1 abgewandten Stirnseiten der Lichtleiterplatten 3 sind mit einem planen Reflektorstreifen 4 abgedeckt, dessen unmittelbar an die Stirnseite der jeweiligen Lichtleiterplatte 3 angesetzte Innenfläche möglichst vollkommen diffus reflektierend ausgebildet ist. Ein dafür geeignetes Material ist ein aus weißgefärbtem Teflon bestehendes Klebeband. Die Reflektorstreifen 4 sind vor allem auf der der Lichteintrittsseite gegenüberliegenden Stirnseite der Lichtleiterplatten 3 funktionsbedeutend. Vorteilhaft ist es aber auch, die übrigen Stirnseiten der Lichtleiterplatten abzudecken.

Auf die Unterseiten der Lichtleiterplatten 3 ist unmittelbar eine Kunststoff-Folie als lichtauskoppelndes Element aufgebracht, die sich von den Außenkanten der Lichtleiterplatten 3 bis nahe an den Hauptreflektor 2 erstreckt. Diese Kunststoff-Folie besitzt eine Mikroprismenstruktur und wird deshalb im folgenden als Prismatik 5 bezeichnet. Materialien dieser Art werden unter dem Warenzeichen "Spectra Vue" von der Firma AlliedSignal Inc. auf dem Markt insbesondere für die Hintergrundbeleuchtung von Flüssigkeitskristallanzeigen angeboten. Hier ist für die Innenraumbeleuchtung eine Prismenstruktur einzusetzen, bei der die Neigungswinkel der Mikroprismen an die gewünschte Lichtverteilungskurve angepaßt sind.

Wie die Darstellungen von Figur 1 und 2 erkennen lassen, besitzt die beschriebene Innenraumleuchte eine ausgesprochen flache Bauform, die insbesondere auch durch die Verwendung von heute verfügbaren Leuchtstofflampen mit 16 mm Durchmesser (uneinheitlich als T5- bzw. T16-Lampen bezeichnet) ermöglicht wird, wie noch zu erläutern ist. Der Lampendurchmesser bestimmt auch in etwa die Dicke der Lichtleiterplatten 3, deren Verhältnis von Dicke zu Breite - in Querschnittsrichtung gesehen - z.B. 1:10 beträgt. Wesentlich für die Funktion der in Figur 1 und Figur 2 dargestellten Innenraumleuchte ist zunächst die lichterzeugende Einheit, bestehend aus der Lampe 1 und dem diese konzentrisch umgebenden Hauptreflektor 2. Da die der Lampe 1 zugekehrte Innenflächen der beiden Halbschalen 21 und 22 vorzugsweise möglichst ideal diffus reflektierend ausgebildet sind und zu diesem Zweck beispielsweise ebenso wie die Reflektorstreifen 4 mit weißgefärbtem Teflon beschichtet sind, bilden die Lampe 1 und der Hauptreflektor 2 eine lichttechnische Einheit, die näherungsweise einem Lambert-Strahler entspricht.

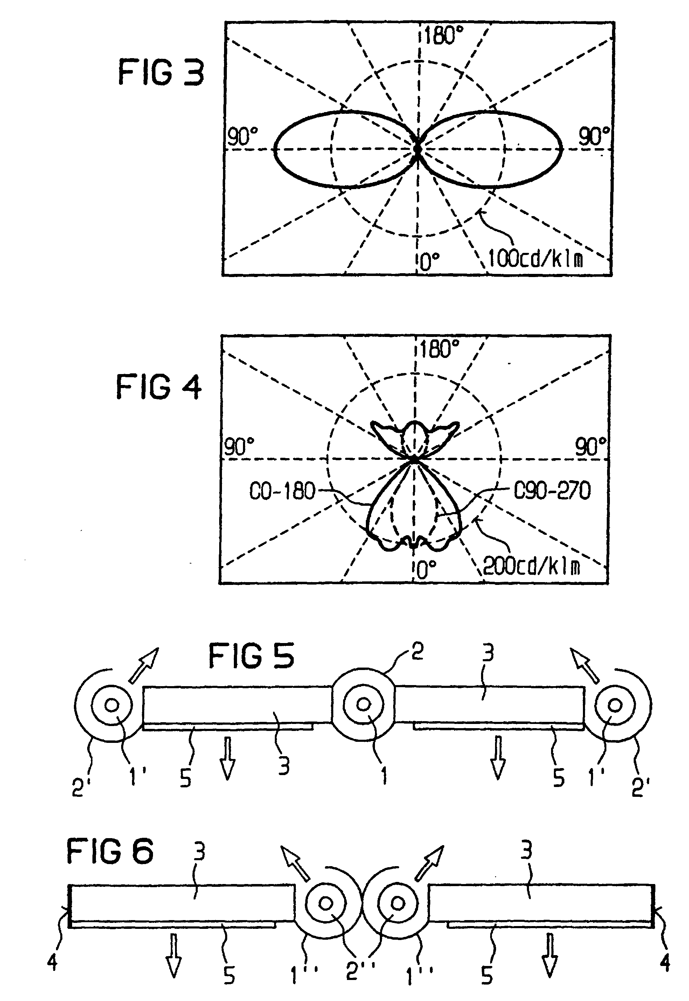

In Figur 3 ist dieser Sachverhalt zur Verdeutlichung in Form eines Polardiagrammes dargestellt. Dieses Diagramm zeigt die Lichtstärkeverteilungskurve dieser lichttechnischen Einheit, bestehend aus Lampe 1 und Hauptreflektor 2 in der sog. C0-180°-Ebene, d.h. hier in der zur Längsachse der Lampe 1 senkrechten Querebene. Beim idealen Lambert-Strahler ergäbe sich ein exakter Kreis als Lichtstärkeverteilungskurve. In diesem Fall ist dieser Kreis näherungsweise ellipsenartig verformt. Dies ist auch darauf zurückzuführen, daß die ideale Kreisform des Hauptreflektors durch die der Lampe 1 zugewandten Stirnseiten der Lichtleiterplatten 3 "gestört" ist. Dennoch verdeutlicht diese in Figur 3 dargestellte Lichtverteilungskurve, daß Licht in die zu beiden Seiten der Lampe 1 angeordneten Lichtleiterplatten 3 nicht etwa gerichtet, sondern möglichst diffus eingestrahlt wird.

Zurückkehrend zur Darstellung von Figur 2 folgt daraus ein Strahlengang des in die Lichtleiterplatten 3 eingekoppelten Lichtes, der beispielhaft durch zwei typische Teilstrahlen S1 bzw. S2 angedeutet ist. Der erste Teilstrahl S1 wird nach dem lichtbrechenden Durchgang durch die der Lampe 1 zugekehrte Stirnfläche der Lichtleiterplatte 3 an deren Ober- bzw. Unterseite mehrfach total reflektiert. Er erreicht so die der Lampe 1 entfernt liegende äußere Stirnfläche der Lichtleiterplatte 3, wo er ungerichtet am entsprechenden Reflektorstreifen 4 wieder in die Lichtleiterplatte 3 zurückreflektiert wird. Dabei tritt schließlich der Fall ein, daß er auf die Unterseite der Lichtleiterplatte 3 auftreffend den Grenzwinkel für die Totalreflexion überschreitet und durch die Prismatik 5 hindurchtretend auf der Unterseite der Innenraumleuchte austritt.

Der zweite Teilstrahl S2 illustriert, daß aufgrund der diffusen Abstrahlcharakteristik der aus Lampe 1 und Hauptreflektor 2 bestehenden lichtabstrahlenden Einheit ein bestimmter Teillichtstrom bereits aus der Unterseite der Lichtleiterplatte 3 austreten kann, ohne daß die Lichtstrahlen dieses Teillichtstromes zuvor Totalreflexionen in der Lichtleiterplatte 3 erfahren. Nicht im einzelnen gezeigt ist in Figur 2, wie die einzelnen Strahlen des aus der Lichtleiterplatte 3 austretenden Lichtes, hier beispielsweise die Teilstrahlen S1 bzw. S2, durch die Prismatik 5 umgelenkt werden. Dies erscheint hier nicht erforderlich, da ausführliche Einzeldarstellungen für den prinzipiellen Aufbau und die Funktion dieser Prismatik 5 in den einleitend bereits diskutierten Dokumenten US-A-55 55 109 sowie US-A-53 96 350 ausführlich erläutert sind und deshalb als bekannt angesehen werden können. Hinzuweisen ist jedenfalls darauf, daß die hier vorliegende Ausführungsform der Prismatik 5 insbesondere im Hinblick auf die Neigungswinkel der Mikroprismen so angepaßt ist, daß sie blendungsbegrenzend wirkt.

In Figur 4, einem der Darstellung von Figur 3 entsprechenden Diagramm, sind für die Erläuterung dieser Blendungsbegrenzung die nun die Innenraumleuchte als Einheit betreffenden Lichtverteilungskurven für die beiden zueinander senkrecht stehenden C0-180°- bzw. C90-270°-Ebenen dargestellt. Aus dem Vergleich der beiden Diagramme von Figur 3 und Figur 4 wird die lichtlenkende Funktion der Lichtleiterplatten 3 in Verbindung mit den entsprechenden Prismatiken 5 deutlich. Die entsprechenden Lichtverteilungskurven sind in durchgezogenen bzw. unterbrochenen Linien dargestellt. Die beiden Kurvenäste der Lichtverteilungskurven für den unteren Halbraum demonstrieren die gut gebündelte Abstrahlcharakteristik der Innenraumleuchte mit einer eindeutigen Querentblendung, insbesondere aber auch einer hervorragenden Längsentblendung der Leuchte. Viele konventionellen Innenraumleuchten erfüllen diese beiden, insbesondere für die Beleuchtung von Arbeitsplätzen wesentlichen Bedingungen nicht in beiden Richtungen gleichermaßen. Die hier erzielten Abstrahlcharakteristiken erlauben es sogar, diese Innenraumleuchte mit der Zweckbestimmung einer Arbeitsplatzleuchte in einem Innenraum senkrecht zur Fensterfront anzuordnen. Dazu kommt ein überraschend günstiger Leuchtenbetriebswirkungsgrad, so daß diese genannten Vorteile nicht etwa durch hohe Lichtstromverluste kompensiert würden.

Figur 4 zeigt aber auch eine andere Besonderheit der Innenraumleuchte, die bisher noch nicht erwähnt wurde. Bei den in Figur 4 dargestellten Lichtverteilungskurven triff ein nennenswerter Lichtstromanteil in den oberen Halbraum aus. Dies ist auf eine bisher noch nicht erwähnte Ausbildung der beschriebenen Innenraumleuchte zurückzuführen. Es ist nämlich möglich, den Hauptreflektor 2 der Innenraumleuchte, ohne seine prinzipielle Funktion als diffuser Reflektor zu beschränken, auch teillichtdurchlässig auszubilden. Den in Figur 4 dargestellten Lichtverteilungskurven liegt eine Innenraumleuchte zugrunde, bei der die obere Halbschale 21 des Hauptreflektors 2 teillichtdurchlässig, hier in Form einer Opalschale, ausgebildet ist. Eine andere Möglichkeit mit ähnlicher lichttechnischer Wirkung besteht darin, diese obere Halbschale 21 des Hauptreflektors 2 aus einem Siebblech herzustellen. Analoges gilt im Prinzip auch sogar für die untere Halbschale 22, falls dies wegen des optischen Effektes erwünscht wäre, ohne dadurch die beschriebene Funktion der Grundform wesentlich zu beeinträchtigen bzw. zu verlassen.

Wie sich die anhand der Figuren 1 bis 4 beschrieben Grundform einer direktstrahlenden Leuchte außerdem weiterbilden ließe, ist beispielhaft in Figur 5 bzw. 6 im Hinblick auf die Anordnung der Lichtquelle(n) dargestellt. In den Beispielen nach Figur 5 ist die vorstehend beschriebene Grundform der Innenraumleuchte durch weitere lichteinkoppelnde Einheiten erweitert. In diesem Falle sind anstatt der Reflektorstreifen 4 an den entsprechenden Stirnflächen der Lichtleiterplatten 3 jeweils eine weitere Lampe 1' und ein weiterer dazu konzentrischer Reflektor 2' vorgesehen. In bezug auf die Lichteinkopplung wirken diese zusätzlichen Einheiten - nur in Gegenrichtung den Anteil der von der Lampe 1 und dem Hauptreflektor 2 in die Lichtleiterplatten 3 eingekoppelten Lichtstromanteil überlagernd - ansonsten völlig analog und wie vorstehend beschrieben.

Zusätzlich besteht die Möglichkeit, die weiteren Reflektoren 2' so auszubilden, daß sie die Lampen 1' nicht vollständig bis hin zu den Rändern der angrenzenden Stirnflächen der Lichtleiterplatten 3 umschließen. Wie mit Pfeilen schematisch angedeutet, kann ein von den weiteren Lampen 1' abgestrahlter Teillichtstrom dann auch in den oberen Halbraum, gegen die Decke gerichtet, aus dem so gebildeten Spalt austreten. Dabei ist vorausgesetzt, daß die Innenraumleuchte von einer Raumdecke pendelnd abgehängt ist. Auch in dieser Ausführungsform bildet die Innenraumleuchte eine Direkt/Indirekt-Leuchte.

In Figur 6 ist eine weitere Möglichkeit einer Ausführungsform für die Innenraumleuchte dargestellt, die einen in bezug auf die Leuchtenmittelebene spiegelbildlich symmetrisch ausgebildeten Leuchtenaufbau mit jeweils einer Lampe 1'' und einem zugeordneten Hauptreflektor 2'' als eine von zwei lichteinkoppelnden Einheiten zeigt, denen jeweils nur einseitig dazu eine einzige Lichtleiterplatte 3 zugeordnet ist. Bei dieser Ausführungsform erfolgt somit die Lichteinkopplung nur in einer Richtung, grundsätzlich gleicht aber das Funktionsprinzip auch dieser Ausführungsform dem der anhand der Figuren 1 bis 4 beschriebenen Grundform der Innenraumleuchte. Wiederholungen zur lichttechnischen Funktion dieser Ausführungsform erübrigen sich daher.

Zusätzlich ist es auch bei diesem Ausführungsbeispiel wieder möglich, die beiden weiteren Hauptreflektoren 2'' die jeweils zugeordnete Lampe 1'' nicht ganz umschließend auszubilden, sondern auf der Oberseite einen Spalt offen zu lassen, durch den ein indirekter Lichtstromanteil gegen die Raumdecke gerichtet austreten kann. Dieses Beispiel zeigt auch, daß es zweckmäßig ist, einen solchen Spalt nahe der Stirnkante der zugeordneten Lichtleiterplatte 3 anzuordnen, um die Funktion des Hauptreflektors als angenäherter Lambert-Strahler im wesentlichen zu gewährleisten. Auch in diesem Falle wirkt die Innenraumleuchte als Direkt/Indirekt-Leuchte, wie schematisch durch Pfeile für die nach oben bzw. nach unten gerichteten Lichtstromanteile angegeben ist.

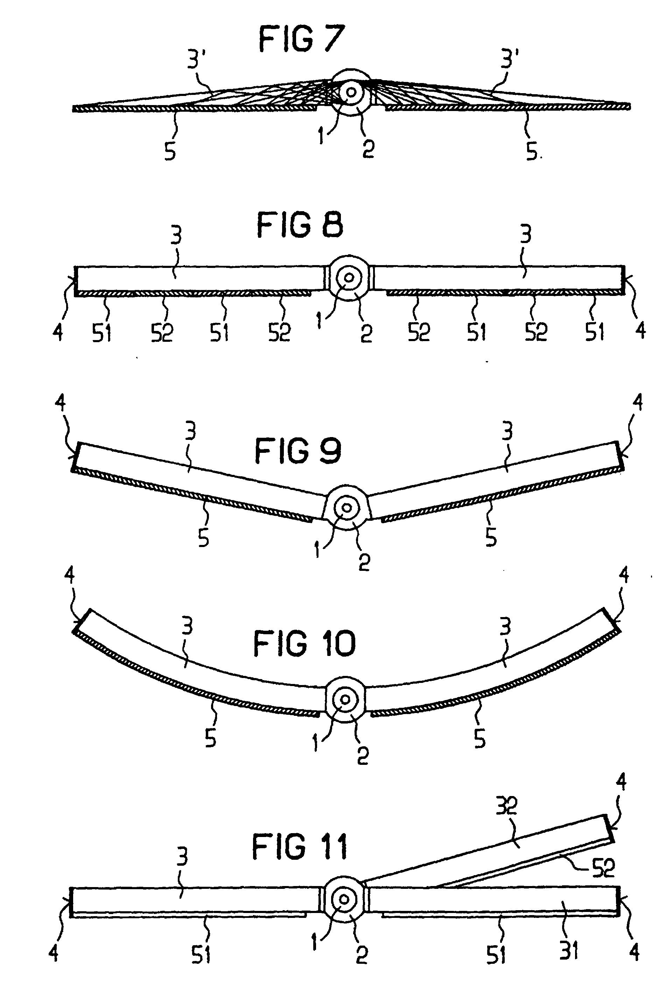

Figur 7 bis 11 zeigen dagegen weitere Ausführungsformen für Innenraumleuchten mit je einer in bezug auf zwei Lichtleiterplatten 3 zentral angeordneten langgestreckten Lichtquelle 1 entsprechend der in den Figuren 1 und 2 dargestellten Grundform. Aufbau und Anordnung der lichtabgebenden Einheit, gebildet aus der Lichtquelle 1 und dem Hauptreflektor 2 mit zwei Halbschalen 21 bzw. 22, ist analog zu dem Ausführungsbeispiel der Figuren 1 und 2 gewählt, so daß für die nachfolgenden Ausführungsbeispiele auch die entsprechenden, bereits beschriebenen Einzelheiten gelten und es hier insoweit keiner Wiederholung bedarf.

In dem in Figur 7 schematisch dargestellten Querschnitt einer weiteren Ausführungsform einer Innenraumleuchte sind die zu beiden Seiten der Lichtquelle 1 und des Hauptreflektors 2 mit seinen Halbschalen 21 bzw. 22 angeordneten Lichtleiterplatten 3' keilförmig gestaltet. Entsprechend dem Neigungswinkel zwischen der Boden- und der Deckfläche der Lichtleiterplatten 3' läßt sich damit, wie in Figur 7 schematisch durch eine Verteilung von Lichtstrahlen angedeutet, die Lichtlenkung in Ausbreitungsrichtung in den Lichtleiterplatten 3' beeinflussen. Im Gegensatz zu dem Ausführungsbeispiel gemäß Figur 1 und 2 treten hier keine entgegen der ursprünglichen Ausbreitungsrichtung zurückreflektierten Teilstrahlen auf. Abgesehen von der noch flacheren, in der Ausgestaltung rein funktional wirkenden Leuchtenbauform bestehen damit hier Möglichkeiten, den Betriebswirkungsgrad der Leuchte weiter zu verbessern.

In Figur 8 ist eine weitere Ausführungsform für eine Innenraumleuchte dargestellt, die auf den ersten Blick der Ausführungsform gemäß Figur 1 bzw. 2 entspricht. Im Unterschied zu der anhand der Figuren 1 und 2 erläuterten Grundform ist hier aber die lichtauskoppelnde Prismatik 5 in einzelne Prismatikbereiche 51 bzw. 52 unterteilt. Diese Prismatikbereiche 51 bzw. 52 sind hinsichtlich ihrer lichtauskoppelnden Oberflächen derart gestaltet, daß sie Licht mit jeweils unterschiedlicher Lichtverteilung ausstrahlen. So sind beispielsweise die einen Prismatikbereiche 51 derart ausgebildet, daß sie eine vorzugsweise tiefstrahlende Lichtausstrahlungscharakteristik besitzen, während andererseits die zweiten Prismatikbereiche 52 eine überwiegend breitstrahlende Lichtausstrahlungscharakteristik aufweisen. Mit dieser Anordnung von Prismatikbereichen 51 bzw. 52 mit jeweils unterschiedlicher Lichtverteilungskurve lassen sich sowohl zonale als auch großflächige Beleuchtungslösungen realisieren und somit unterschiedliche Lichtstimmungen erzeugen.

Figur 9 zeigt ein weiteres Ausführungsbeispiel für eine Innenraumleuchte. Im Unterschied zu den bisher beschriebenen Ausführungsformen von Innenraumleuchten sind hier diese beiden Lichtleiterplatten 3 um einen vorgegebenen Winkel in der Vertikalen angestellt. Wenn die Lichtleiterplatten 3 in bezug auf die Leuchtenlängsachse scharnierartig drehbar angeordnet sind, ist dieser Anstellwinkel nicht fest, sondern sogar einstellbar. Da die lichtauskoppelnde Prismatik 5 eine vorgegebene Lichtverteilungskurve mit definierter Hauptausstrahlungsrichtung besitzt, wird diese Hauptausstrahlungsrichtung bei einem Anstellen der Lichtleiterplatten 3 um einen vorgegebenen Winkel ebenfalls um diesen Anstellwinkel aus der Vertikalen nach außen geschwenkt. Bei einer beispielsweise vorwiegend tiefstrahlenden Lichtausstrahlungscharakteristik der Prismatiken 5 läßt sich so mit wachsendem Anstellwinkel der Lichtleiterplatten 3 eine Lichtausstrahlung der gesamten Innenraumleuchte erzielen, die mit wachsendem Anstellwinkel immer mehr breitstrahlend wird.

In Figur 10 ist ebenfalls im Querschnitt eine Ausführungsform der Innenraumleuchte gezeigt, bei der die Lichtleiterplatten 3 - im Gegensatz zu allen vorbeschriebenen Ausführungsformen - von der Leuchtenmittelachse nach außen gewölbt ausgebildet sind. Da die Lichtleiterplatten 3 aus einem Kunststoffmaterial gebildet sind, ist ein derartig gewölbtes Querschnittsprofil der Lichtleiterplatten 3 mit einfachen Mitteln zu realisieren. Weiterhin bestehen die Prismatiken 5 voraussetzungsgemäß aus einer dünnen Kunststoff-Folie mit ausreichender Elastizität, so daß sich diese ohne weiteres mechanisch, an der Unterseite der Lichtleiterplatten 3 unmittelbar festlegen lassen, ohne dabei Wirkungsgradverluste der Innenraumleuchte in Kauf nehmen zu müssen. Lichttechnisch betrachtet, ist diese in Figur 10 dargestellte Ausführungsform einer Innenraumleuchte mit schwingenartig gewölbten Lichtleiterplatten 3 eine Alternative zu der Ausführungsform von Figur 9.

In Figur 11 ist eine Ausführungsform der Innenraumleuchte dargestellt, bei der die planen Lichtleiterplatten 3, in Längsrichtung der Leuchte gesehen, in Teilbereiche gegliedert sind, so daß beispielsweise ein zwischen zwei stirnseitigen Endbereichen 31 der Lichtleiterplatten 3 zentral angeordneter Mittelbereich 32 individuell gegenüber diesen Stirnbereichen 31 um einen vorgegebenen Winkel anstellbar ist. Geht man davon aus, daß die stirnseitige angeordneten, horizontal ausgerichteten Teilbereiche 31 der Lichtleiterplatten 3 lichtauskoppelnde Prismatiken 5 mit lichtverteilenden Eigenschaften tragen, wie sie vorstehend für das anhand der Figuren 1 und 2 beschriebenen Ausführungsbeispiele erläutert wurden, so bildet auch die in Figur 11 dargestellte Ausführungsform zunächst eine Innenraumleuchte mit Längs- und Querentblendung.

Diese Leuchte läßt sich zu einem Leuchtensystem ausgestalten, falls man nun für die ausstellbaren Mittelbereiche 32 der Leiterplatten 3 eine Prismatik 51 wählt, deren Lichtausstrahlungscharakteristik nicht blendungsbegrenzt breitstrahlend, sondern vorwiegend tiefstrahlend ist. In diesem Falle wirkt der auszustellende Mittelbereich 31 der Ausführungsform nach Figur 11 ähnlich wie ein herkömmlicher Strahler mit einer stark gebündelten Lichtverteilung, der unmittelbar in eine blendungsbegrenzte Innenraumleuchte integriert ist. Mit der in Figur 11 dargestellten Ausführungsform läßt sich so neben einer allgemeinen Beleuchtung ein lokal begrenzter Lichtakzent setzen.

Bei allen vorstehend anhand der Figuren 1 bis 11 beschriebenen Ausführungsformen wurde als Lichtquelle 1 eine langgestreckte Lampe, vorzugsweise eine Leuchtstofflampe, mit möglichst geringem Durchmesser zugrundegelegt. Ausführungsformen der Erfindung können hiervon abweichen und im übrigen das beschriebene Leuchtenkonzept verwenden.

Die anhand der Zeichnung beschriebenen Ausführungsbeispiele für Innenraumleuchten demonstrieren zunächst, daß die erfindungsgemäße Lösung, auch in Verbindung mit unterschiedlichen Lampentypen, eine Vielzahl von Realisierungsmöglichkeiten bietet, um Innenraumleuchten zu gestalten, ohne dabei die Lichttechnik zu vernachlässigen. Im Gegenteil belegen insbesondere auch die Ausführungsformen, bei denen eine langgestreckte Leuchtstofflampe als Lichtquelle eingesetzt wird, daß sich auch für diesen Lampentyp Innenraumleuchten mit hohem Wirkungsgrad und den insbesondere für Bildschirmarbeitsplätze geforderten Entblendungseigenschaften, auch hinsichtlich der Reflexblendung, schaffen lassen, ohne dabei notwendigerweise ein Spiegelraster einsetzen zu müssen. Dies erlaubt neue Gestaltungsmöglichkeiten, insbesondere auch im Hinblick auf die mögliche Bauhöhe. Für diese ist bei Spiegelrasterleuchten immer aus optischen Gründen eine entsprechende Bauhöhe vorgegeben. Im vorliegenden Fall entfällt diese konstruktive Beschränkung und bietet so dem Leuchtengestalter völlig neue Möglichkeiten, auch gestalterische Akzente zu setzen.

## Patentansprüche

1. Innenraumleuchte mit mindestens einer Lichtquelle (1, 1', 1'') und mindestens einem senkrecht und quer zur Längsachse dieser Lichtquelle angeordneten Lichtleiter (3), der auf einer seiner nach unten weisenden Lichtaustrittsseite zugeordneten Oberfläche eine Prismenstruktur (5) aufweist, **dadurch gekennzeichnet, daß** die aus Mikroprismen bestehende Prismenstruktur (5) derart ausgebildet ist, daß die Lichtausstrahlung der Innenraumleuchte einen vorgegebenen Ausblendwinkel, insbesondere einen vorgegebenen Ausblendwinkel für Bildschirmarbeitsplätze, nicht übersteigt, und
daß mindestens einer Lichtquelle (1, 1', 1') ein Reflektor (2, 2', 2") zugeordnet ist, welcher zusammen mit dieser Lichtquelle Licht in den Lichtleiter (3) einkoppelt und welcher so ausgebildet ist, daß ein Teil des von der Lichtquelle (1, 1', 1") abgestrahlten Lichtstroms in den oberen Halbraum austritt.

2. Innenraumleuchte nach Anspruch 1, **dadurch gekennzeichnet, daß** der Lichtquelle zugeordnet ein Hauptreflektor (2, 2', 2" bzw. 7) vorgesehen ist, der gemeinsam mit der Lichtquelle in bezug auf einen zur Lichteintrittsfläche des Lichtleiters senkrechten und in Haupttransportrichtung des in diesen eingestrahlten Lichtes liegenden Querschnitt annähernd die Charakteristik eines Lambertschen Strahlers aufweist.

3. Innenraumleuchte nach Anspruch 1 oder 2, **dadurch gekennzeichnet, daß** der Hauptreflektor (2, 2', 2") im Querschnitt konzentrisch zur Lichtquelle (1, 1' bzw. 1") angeordnet ist, seine der Lichtquelle zugekehrte Innenfläche diffus reflektierend ausgebildet ist und mit mindestens einer Seitenkante an einer der Lichtquelle zugewandten Stirnseite des Lichtleiters (3) anliegt.

4. Innenraumleuchte nach einem der Ansprüche 1 bis 3, **dadurch gekennzeichnet, daß** der Hauptreflektor (2, 2', 2") mindestens in Teilbereichen seiner Oberfläche lichtdurchlässig ausgebildet ist.

5. Innenraumleuchte nach Anspruch 4, **dadurch gekennzeichnet, daß** die lichtdurchlässige Oberfläche des Hauptreflektors (2, 2', 2") transparent ausgebildet ist.

6. Innenraumleuchte nach Anspruch 4, **dadurch gekennzeichnet, daß** die lichtdurchlässige Oberfläche des Hauptreflektors (2, 2', 2") in Form eines Lochbleches ausgebildet ist.

7. Innenraumleuchte nach einem der Ansprüche 1 bis 6, **dadurch gekennzeichnet, daß** der Lichtleiter (3), senkrecht zu der Haupttransportrichtung des sich in ihm ausbreitenden Lichtes betrachtet, eine konstante Dicke aufweist und mindestens auf der der Lichtquelle (1, 1', 1") abgewandten Stirnseite einen weiteren Reflektor (2' bzw. 4) trägt.

8. Innenraumleuchte nach Anspruch 7, **dadurch gekennzeichnet, daß** der weitere Reflektor (4) als eine auf die zugeordnete Stirnfläche des Lichtleiters (3) direkt aufgebrachte, in Richtung auf diese diffus reflektierende Schicht ausgebildet ist.

9. Innenraumleuchte nach Anspruch 7, **dadurch gekennzeichnet, daß** der weitere Reflektor (2') der dem Hauptreflektor (2) gegenüberliegenden Stirnfläche des Lichtleiters (3) zugeordnet, und zu dem Hauptreflektor spiegelbildlich entsprechend ausgebildet ist und in ihm eine weitere Lichtquelle (1') angeordnet ist.

10. Innenraumleuchte nach einem der Ansprüche 7 bis 9, **dadurch gekennzeichnet, daß** der Lichtleiter (3) als planparallele oder flächenparallel gewölbte Lichtleiterplatte ausgebildet ist.

11. Innenraumleuchte nach einem der Ansprüche 1 bis 6, **dadurch gekennzeichnet, daß** der Lichtleiter (3), in einer zu der Haupttransportrichtung des sich in ihm ausbreitenden Lichtes parallelen Ebene ein sich in dieser Haupttransportrichtung keilförmig verjüngendes Querschnittsprofil aufweist

12. Innenraumleuchte nach einem der Ansprüche 7 bis 11, **dadurch gekennzeichnet, daß** die Lichtquelle (1, 1', 1") als eine langgestreckte Lampe ausgebildet ist, zu deren beiden Seiten je ein Lichtleiter (3) angeordnet ist und der Hauptreflektor (2) als ein die Lichtquelle konzentrisch umschließender Zylinder mit seitlichen Längsschlitzen ausgebildet ist, in die jeweils die der Lichtquelle zugewandte Stirnfläche je einer der Lichtleiter (3) plan abschließend eingesetzt ist.

13. Innenraumleuchte nach einem der Ansprüche 7 bis 11, **dadurch gekennzeichnet, daß** in der Leuchtenmittelebene, zueinander parallel liegend, nebeneinander zwei Lichtquellen (1") angeordnet sind, wobei jeder dieser Lichtquellen ein eigener Hauptreflektor (2") zugeordnet ist, an den jeweils ein Lichtleiter (3) stirnseitig angesetzt ist.

14. Innenraumleuchte nach einem der Ansprüche 12 oder 13, **dadurch gekennzeichnet, daß** der mindestens eine Lichtleiter (3) in bezug auf eine die Längsachse der Lichtquelle (1) enthaltende Horizontalebene um einen vorgegebenen Winkel in vertikaler Richtung angestellt bzw. anstellbar ist.

15. Innenraumleuchte nach Anspruch 14, **dadurch gekennzeichnet, daß** der mindestens eine Lichtleiter (3) in Teilbereiche (31, 32) unterteilt ist, die in Richtung der Längsachse der Lichtquelle (1) aneinandergrenzen und individuell anstellbar sind.

16. Innenraumleuchte nach einem der Ansprüche 1 bis 15, **dadurch gekennzeichnet, daß** die das in dem mindestens einen Lichtleiter (3) transportierte Licht auskoppelnde Prismenstruktur (5) in aneinandergrenzende Teilbereiche (51, 52) mit unterschiedlicher Lichtabstrahlcharakteristik gegliedert ist.

17. Innenraumleuchte nach einem der Ansprüche 1 bis 16, **gekennzeichnet durch** ihre Verwendung als Pendel- bzw. Deckenleuchte für Arbeitsplatzbeleuchtung einschließlich einer Orientierung in einem Raum derart, daß deren Lampenlängsachse im wesentlichen senkrecht zu einer Fensterfront dieses Raumes steht.

18. Innenraumleuchte nach einem der Ansprüche 1 bis 6, **dadurch gekennzeichnet, daß** die Lichtquelle als ringförmige Lampe (1''') ausgebildet ist und der Lichtleiter (3"), von der Lampe umschlossen, mit ihrem Querschnitt fluchtend angeordnet ist.

## Claims

1. An interior light fitting with at least one light source (1, 1', 1") and at least one optical waveguide (3) disposed perpendicularly and transversely to the longitudinal axis of said light source, the optical waveguide having a prism structure (5) on a surface associated with its downwardly facing light exit side, **characterised in that** the prism structure (5) consisting of microprisms is so constructed that the radiation emittance of light from the interior light fitting does not exceed a predetermined anti-dazzle angle, particularly a predetermined anti-dazzle angle for monitor workstations, and **in that** associated with at least one light source (1, 1', 1') is a reflector (2, 2', 2") which together with this light source inputs light into the optical waveguide (3) and is so constructed that part of the luminous flux emitted by the light source (1, 1', 1") emerges into the top half of the room.

2. An interior light fitting according to claim 1, **characterised in that** associated with the light source is a main reflector (2, 2', 2"; 7) which in conjunction with the light source in respect of a cross-section perpendicular to the light entry surface of the optical waveguide and situated in the main direction of transport of the light radiated into the latter has approximately the characteristic of a Lambert radiator.

3. An interior light fitting according to claim 1 or 2, **characterised in that** the main reflector (2, 2', 2") is disposed to be concentric in cross-section to the light source (1, 1', 1"), its inner surface facing the light source is constructed to be diffuse-reflecting and bears by at least one side edge against an end face of the optical waveguide (3) facing the light source.

4. An interior light fitting according to any one of claims 1 to 3, **characterised in that** the main reflector (2, 2', 2") is constructed to transmit light at least in partial zones of its surface.

5. An interior light fitting according to claim 4, **characterised in that** the light-transmitting surface of the main reflector (2, 2', 2") is constructed to be transparent.

6. An interior light fitting according to claim 4, **characterised in that** the light-transmitting surface of the main reflector (2, 2', 2") is constructed in the form of a perforate metal sheet.

7. An interior light fitting according to any one of claims 1 to 6, **characterised in that** the optical waveguide (3) as considered perpendicularly to the main direction of transport of the light propagated therein has a constant thickness and carries another reflector (2'; 4) at least on the end face remote from the light source (1, 1', 1").

8. An interior light fitting according to claim 7, **characterised in that** the additional reflector (4) is constructed as a coating applied directly to the associated end face of the optical waveguide (3), said coating having diffuse-reflection in the direction of said end face.

9. An interior light fitting according to claim 7, **characterised in that** the additional reflector (2') is associated with the end face of the optical waveguide (3) remote from the main reflector (2) and is constructed as a mirror-image of the main-reflector and another light source (1') is disposed therein.

10. An interior light fitting according to any one of claims 7 to 9, **characterised in that** the optical waveguide (3) is constructed as a plane-parallel or surface-parallel curved optical waveguide plate.

11. An interior light fitting according to any one of claims 1 to 6, **characterised in that** the optical waveguide (3) has, in a plane parallel to the main direction of transport of the light propagated therein, a cross-sectional profile which tapers to be wedge-shaped in said main direction of transport.

12. An interior light fitting according to any one of claims 7 to 11, **characterised in that** the light source (1, 1', 1") is constructed as an elongate lamp on either side of which there is disposed an optical waveguide (3) and the main reflector (2) is constructed as a cylinder which concentrically surrounds the light source and has lateral slots in each of which there is inserted so as to be in flat flush relationship the end face of each of the optical waveguides (3) facing the light source.

13. An interior light fitting according to any one of claims 7 to 11, **characterised in that** two light sources (1") are disposed side by side and in parallel relationship in the central plane of the light fitting, each of said light sources being associated with its own main reflector (2"), an optical waveguide (3) being attached to the end face of each such reflector.

14. An interior light fitting according to claim 12 or 13, **characterised in that** the at least one optical waveguide (3) is set or is settable to a predetermined angle in the vertical direction with respect to a horizontal plane containing the longitudinal axis of the light source (1).

15. An interior light fitting according to claim 14, **characterised in that** the at least one optical waveguide (3) is divided into partial zones (31, 32), which adjoin one another and are individually settable in the direction of the longitudinal axis of the light source (1).

16. An interior light fitting according to any one of claims 1 to 15, **characterised in that** the prism structure (5) outputting the light transported in the at least one optical waveguide (3) is divided into adjoining partial zones (51, 52) having different light radiating characteristics.

17. An interior light fitting according to any one of claims 1 to 16, **characterised by** its use as a pendant or ceiling light for workstation illumination including an orientation in a room such that the light longitudinal axis is substantially perpendicular to a window front of said room.

18. An interior light fitting according to any one of claims 1 to 6, **characterised in that** the light source is constructed as an annular lamp (1''') and the optical waveguide (3"), surrounded by the lamp, is disposed in alignment with its cross-section.

## Revendications

1. Luminaire d'intérieur comportant au moins une source lumineuse (1, 1', 1") et au moins un conduit de lumière (3) qui est placé perpendiculairement à et en travers de l'axe longitudinal de cette source lumineuse et présentant une structure à prismes (5) sur une surface associée à son côté d'émergence de lumière dirigé vers le bas, **caractérisé par le fait que** la structure à prismes (5), constituée de microprismes, est faite de façon telle que l'émission de lumière du luminaire d'intérieur ne dépasse pas un angle de défilement fixé, en particulier un angle de défilement fixé pour les postes de travail avec écran, et qu'à au moins une source lumineuse (1, 1', 1") est associé un réflecteur (2, 2', 2") qui, conjointement avec cette source lumineuse, fait entrer la lumière dans le conduit de lumière (3) et est fait de façon qu'une partie du flux lumineux émis par la source lumineuse (1, 1', 1") sorte dans le demi-espace supérieur.

2. Luminaire d'intérieur selon la revendication 1, **caractérisé par le fait qu'**à la source lumineuse est prévu associé un réflecteur principal (2, 2', 2" ou 7) qui, conjointement avec la source lumineuse, présente approximativement, relativement à une section perpendiculaire à la surface d'entrée de lumière du conduit de lumière et située dans la direction principale de transport de la lumière entrée dans celui-ci, la caractéristique d'une source lambertienne.

3. Luminaire d'intérieur selon l'une des revendications 1 et 2, **caractérisé par le fait que** le réflecteur principal (2, 2', 2") est, en coupe transversale, placé concentriquement à la source lumineuse (1, 1', 1"), sa surface intérieure dirigée vers la source lumineuse produit une réflexion diffuse, et il s'appuie par au moins un bord latéral sur un côté frontal du conducteur de lumière (3) dirigé vers la source lumineuse.

4. Luminaire d'intérieur selon l'une des revendications 1 à 3, **caractérisé par le fait que** le réflecteur principal (2, 2', 2") laisse passer la lumière au moins dans des parties de sa surface.

5. Luminaire d'intérieur selon la revendication 4, **caractérisé par le fait que** la surface du réflecteur principal (2, 2', 2") qui laisse passer la lumière est transparente.

6. Luminaire d'intérieur selon la revendication 4, **caractérisé par le fait que** la surface du réflecteur principal (2, 2', 2") qui laisse passer la lumière est formée d'une plaque perforée.

7. Luminaire d'intérieur selon l'une des revendications 1 à 6, **caractérisé par le fait que** le conduit de lumière (3), considéré perpendiculairement à la direction principale de transport de la lumière qui s'y propage, présente une épaisseur constante et porte un autre réflecteur (2' ou 4) au moins sur le côté frontal opposé à la source lumineuse (1, 1', 1").

8. Luminaire d'intérieur selon la revendication 7, **caractérisé par le fait que** l'autre réflecteur (4) est formé d'une couche appliquée directement sur la surface frontale associée du conduit de lumière (3) et produisant une réflexion diffuse en direction de celle-ci.

9. Luminaire d'intérieur selon la revendication 7, **caractérisé par le fait que** l'autre réflecteur (2') est associé à la surface frontale du conduit de lumière (3) opposée au réflecteur principal (2), correspond à l'image spéculaire du réflecteur principal, et contient une autre source lumineuse (1').

10. Luminaire d'intérieur selon l'une des revendications 7 à 9, **caractérisé par le fait que** le conduit de lumière (3) est formé d'une plaque conductrice de lumière à faces planes ou courbes parallèles.

11. Luminaire d'intérieur selon l'une des revendications 1 à 6, **caractérisé par le fait que** le conduit de lumière (3) présente, dans un plan parallèle à la direction principale de transport de la lumière qui s'y propage, un profil de section qui se rétrécit en forme de coin dans cette direction principale de transport.

12. Luminaire d'intérieur selon l'une des revendications 7 à 11, **caractérisé par le fait que** la source lumineuse (1, 1', 1") est une lampe allongée de chaque côté de laquelle est placé un conduit de lumière (3), et le réflecteur principal (2) est un cylindre qui entoure concentriquement la source lumineuse et a des fentes longitudinales latérales dans chacune desquelles est engagée, avec terminaison plane, la surface frontale dirigée vers la source lumineuse d'un des conduits de lumière (3).

13. Luminaire d'intérieur selon l'une des revendications 7 à 11, **caractérisé par le fait que** deux sources lumineuses (1") sont placées l'une à côté de l'autre parallèlement l'une à l'autre dans le plan médian du luminaire, à chacune de ces sources lumineuses étant associé un réflecteur principal propre (2") sur lequel est monté frontalement un conduit de lumière (3).

14. Luminaire d'intérieur selon l'une des revendications 12 et 13, **caractérisé par le fait qu'**au moins un conduit de lumière (3) est réglé ou réglable d'un angle fixé dans la direction verticale par rapport à un plan horizontal contenant l'axe longitudinal de la source lumineuse (1).

15. Luminaire d'intérieur selon la revendication 14, **caractérisé par le fait que** le conduit ou les conduits de lumière (3) est ou sont divisé(s) en zones partielles (31, 32) qui sont contiguës dans la direction de l'axe longitudinal de la source lumineuse (1) et sont réglables individuellement.

16. Luminaire d'intérieur selon l'une des revendications 1 à 15, **caractérisé par le fait que** la structure à prismes (5) qui déconnecte la lumière transportée dans le conduit et les conduits de lumière (3) est divisée en zones partielles contiguës (51, 52) à caractéristiques d'émission de lumière différentes.

17. Luminaire d'intérieur selon l'une des revendications 1 à 16, **caractérisé par** son utilisation comme luminaire suspendu ou plafonnier pour l'éclairage de postes de travail, y compris une orientation dans une pièce de façon telle que l'axe longitudinal de sa lampe ou ses lampes soit sensiblement perpendiculaire à une face à fenêtre(s) de cette pièce.

18. Luminaire d'intérieur selon l'une des revendications 1 à 6, **caractérisé par le fait que** la source lumineuse est une lampe annulaire (1''') et le conduit de lumière (3"), entouré par cette lampe, est placé avec sa section à fleur.
